# EUROPEAN PATENT SPECIFICATION

(11) **EP 1 068 604 B1**
(45) Date of publication and mention of the grant of the patent: **03.05.2006**
(21) Application number: 99909173.9
(22) Date of filing: 25.01.1999
(51) Int. Cl.: G09B 21/00

(54) **SKETCHING DEVICE FOR TACTILE GRAPHICS**
SKIZZIERGERÄT FÜR ERTASTBARE GRAPHIKEN
EQUIPEMENT PERMETTANT DE REALISER DES GRAPHIQUES TACTILES

(43) Date of publication of application: 17.01.2001
(73) Proprietor: Bhatt, Dilip Balmukund, Ahmedabad 380 059 (IN); Bhatt, Pragnya Dilip, Ahmedabad 380 059 (IN)
(72) Inventor: Bhatt, Dilip Balmukund, Ahmedabad 380 059 (IN); Bhatt, Pragnya Dilip, Ahmedabad 380 059 (IN)
(74) Representative: Petersen, Frank
(86) International application number: PCT/IN1999/000002
(87) International publication number: WO 2000/043976

(56) References cited:
- GB-A- 2 314 531
- US-A- 4 012 010
- PATENT ABSTRACTS OF JAPAN vol. 96, no. 5 & JP 08 003 857 A (MATSUI) 09 January 1996

## Description

### FIELD OF THE INVENTION

This invention relates to a sketching device for tactile graphics through thread delivery over Hook & Loop fabric surface for use by a blind person. The device is useful to be used as a educational aid by the teachers/blind person.

### PRIOR ART

The blind children/persons communicate with the world by sensing touch, feel, sound, signals and smell. There are some tactile graphics aids available in the prior art. One of such aid comprises a plain surface having stencils art out of card board or wood pasted thereon, and which is being touched and sensed by a blind person. Another tactile graphic aid comprises thread stitching on paper by swing needle. Yet another tactile graphics aid comprises a paper having perforated dots therein of the shape which is to be sensed by a blind person. Still another device comprises a spur wheel to make dotted lines on paper. Another tactile graphics aid comprises a metal sheet having embossed lines thereon of the desired shape.

Documents GB 2 314 531 A, JP 8003857 and US-4,012,010 discloses sketching devices for drawings with threads.

### DISADVANTAGES OF THE PRIOR ART

There are certain disadvantages associated with the above mentioned educational aids. One of the main disadvantage is that it takes a lot of time to prepare these aids to be used by the teacher as well as by the blind students.

Another disadvantage is that the blind students cannot practice without the help of a teacher that is self performance/learning is difficult.

Yet another disadvantage is that of the wastage of materials during the fabrication of such devices.

Still another disadvantage is that different sketches, figures cannot be prepared by the user over the same media.

### OBJECTS OF THE INVENTION

Therefore the main object of this invention is to provide a Sketching device which can be used by a blind person for self performance for making Sketches over a Hook & Loop fabric surface or glued adhesive surface by thread delivery thereon and realisation of the same and thus increases the creativity of the child / student.

Another object of this invention is to provide a Sketching device by which the Sketch can be drawn on a slate having a Hook & Loop fabric surface by the blind person as well as mentally retarded persons, hearing impaired persons on its own and thus stimulates locamatar movement of the wrist/muscles.

Still another object of this invention is to propose a sketching device to make sketches on a Hooks fabric surface and which are easily removed and thus renders the device to be used repeatedly.

Yet another object of this invention is to provide a sketching device to make sketches on a Hook & Loop surface in which the length can be measured by providing knots in the threads at predetermined intervals.

Another object of this invention is that the device can be used with geometrical instruments like campas, scale etc.

### STATEMENT OF THE INVENTION

According to this invention there is provided a Sketching device for use by a blind person comprising a pen body characterized by being secured to a metallic encloser, slots being provided in the opposite sides of said encloser for holding a bobbin spool secured on an axle for winding acrylic or wool thread thereon,a knob being provided at both the ends of said axle for winding said thread in the bobbin spool,means being provided at the writing end of the pen body for cutting the thread.

In accordance with this invention the device used by the blind person to prepare Sketches, drawings, graphics over a Hook & Loop surface has a ball pen type body for facilitating the passes of the acrylic thread or wool thread therethrough. The upper end of the pen body is secured to an encloser by means of a nut. The encloser is provided to hold a bobbin spool therein and in the slots provided in the opposite sides of the encloser. The bobbin spool is secured on an axle adapted to be fitted movably in the slots provided in the sides of the encloser. A knob is provided at both ends of the axle for winding the acrylic thread in the bobbin spool manually. Means comprising a notched sleeve is provided at the pen body near the writing end of said body for facilitating the cutting of the thread.

### DETAILED DESCRIPTION OF THE INVENTION

A Sketching device according to a preferred embodiment is herein described and illustrated in the accompanying drawings wherein:
Fig. 1 shows the perspective view of the sketching device to be used on Hook & Loop fabric, fastener unit.
Fig. 2 shows the front and side view of the encloser
Fig. 3 shows the front and side view of the bobbin spool; and
Fig. 4 shows front and side view of the notched sleeve.

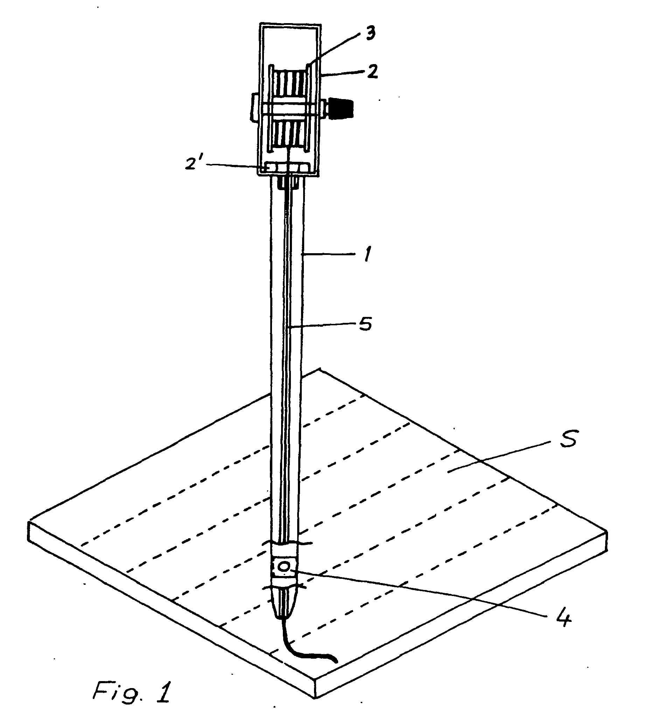

Referring to the drawings particular Fig. 1 the sketching device proposed by this invention to be used by a blind person for tactile graphics through thread delivery over hook and loop surface S has a hollow pen type body 1 having a metallic for example aluminium encloser 2 secured at the top end of the pen body 1 with the help of a conventional fastening means 2. A bobbin spool 3 is provided within a metallic encloser 2 rotatably and removably for holding acrylic or wool thread 5 wounded therein. Cutting means for example a notched sleeve 4 is provided near the lower end of the pen body 1 for facilitating the cutting of the thread after the completion of the work by the user.

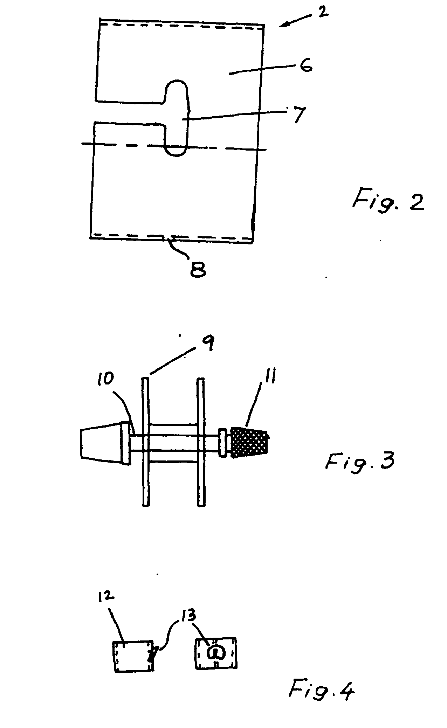

The encloser 2 as shown in Fig. 2 has tubular body 6 in the form of any shape like a rectangle, square or circular. In the figure a rectangular tubular shape has been shown but the invention is not restricted to such a shape. A T-slot 7 is provided on opposite sides of the encloser body 6 to hold the bobbin spool 3 therein during the use of the device. Further a hole 8 is provided in the bottom side of the encloser body 6 for the passes of the thread 5 therethrough into the pen body 1.

As shown in Fig. 3 bobbin spool 3 comprises a pair of side supports 9 secured on a shaft 10 for supporting the binding of the thread 5 in the spool 3. A knob 11 is provided on both the ends of the shaft 10 for facilitating the rotation of the spool 3 for the binding of the thread therein.

As shown in Fig. 4 the cutting means comprises a sleeve 12 having a notch 13 provided for cutting the thread of the user as and when required. The sleeve 12 is adapted to be secured near the delivery/writing of the pen body 1.

Thus it is seen that a blind person can make Sketches, drawings, letters, graphical symbols geometrical shapes by self on a Hook & Loop fabric glued adhesive surface without the help of other persons and can feel/realise the same by touching the thread over the surface and thus it stimulates the user for self learning. A pilot thread is secured with the bobbin spool to guide the thread to be bounded on to the bobbin spool.

According to an option the device may be made as a one piece item charted from a plastic material.

## Claims

1. A Sketching device for use by a blind person comprising a pen body (1) **characterized** being secured to a metallic encloser (2), slots being provided in the opposite sides of said encloser for holding a bobbin spool (3) secured on an axle (10) for winding acrylic or wool threads (5) thereon, a knob (11) being provided at both the ends of said axle for winding said thread in the bobbin spool, means (4) being provided at the writing end of the pen body for cutting the thread.

2. A device as claimed in claim 1 wherein said metallic encloser comprises a tubular body of any shape like a rectangle, square and circle.

3. A device as claimed in claims 1 and 2 wherein a T shaped slot is provided on opposite sides of said body of the encloser for holding the bobbin spool removably and rotatably therein.

4. A device as claimed in claims 1 and 3, wherein said bobbin spool comprises side supports secured to an axle for holding the thread therebetween,knobs being provided on either ends of said axle for facilitating the rotation of the said bobbin spool by the user.

5. A device as claimed in claim 1 wherein the cutting means comprises a sleeve having a cutting notch provided therewith, said sleeve is adapted to be fitted near the delivery/writing end of said pen body.

## Patentansprüche

1. Ein Zeichengerät für die Benutzung durch eine blinde Person mit einem Stiftkörper (1)
**dadurch gekennzeichnet,**
**dass** dieser an einem metallischen Gehäuse (2) angebracht ist, wobei an den gegenüberliegenden Seiten des Gehäuses Schlitze vorgesehen sind zum Halten einer auf einer Achse (10) gelagerten Spule (3) um Acryl- oder Wollfäden (5) darauf aufzuwickeln und dass ein Knopf (11) an beiden Enden der genannten Achse vorgesehen ist, um den genannten Faden auf der Spule aufzuwickeln und dass ein Mittel (4) an dem zum Schreiben vorgesehenen Ende des Stiftkörpers vorgesehen ist zum Abschneiden des Fadens.

2. Ein Gerät nach Anspruch 1,
wobei das metallische Gehäuse einen rohrförmigen Körper enthält mit einer Form eines Rechtecks, eines Quadrats oder eines Kreises.

3. Ein Gerät nach Anspruch 1 und 2,
wobei ein T-förmiger Schlitz an gegenüberliegenden Seiten des genannten Körpers des Gehäuses vorgesehen ist, um die Spule entfernbar und drehbar zu halten.

4. Ein Gerät nach Anspruch 1 und 3,
wobei die genannte Spule seitliche Halterungen aufweist, die an der Achse zur Halterung des Fadens dazwischen angeordnet sind, und wobei Knöpfe vorgesehen sind an jedem Ende der genannten Achse, um die Drehbewegung der Spule durch den Benutzer zu erleichtern.

5. Ein Gerät nach Anspruch 1,
wobei das Schneidmittel eine Hülse aufweist, an der eine Schneidkerbe vorgesehen ist, wobei die genannte Hülse angepasst ist, um in der Nähe des Austritts-/Schreibendes des Stiftkörpers angeordnet zu werden.

## Revendications

1. Un appareil de traçage pour utilisation par une personne aveugle comprenant un corps de crayon (1) **caractérisé en ce qu'**il est attaché à une enceinte métallique (2), des fentes étant fournies sur les côtés opposés de ladite enceinte pour maintenir un corps de bobine (3) attaché sur un axe (10) pour enrouler un fil acrylique ou de laine (5) sur le corps de bobine, un loquet (11) étant fourni aux deux extrémités dudit axe pour enrouler ledit fil dans le corps de bobine, des moyens (4) étant fournis à l'extrémité graphique du corps de crayon pour couper le fil.

2. Un appareil selon la revendication 1, dans lequel ladite enceinte métallique comprend un corps tubulaire de n'importe quelle forme, telle qu'un rectangle, un carré et un cercle.

3. Un appareil selon les revendications 1 et 2, dans lequel une fente en forme de T est fournie sur les côtés opposés dudit corps de l'enceinte pour maintenir le corps de bobine dans le corps de l'enceinte de façon amovible et rotative.

4. Un appareil selon les revendications 1 et 3, dans lequel ledit corps de bobine comprend des supports latéraux attachés à un axe pour maintenir le fil entre les supports, des loquets étant fournis des deux cotés dudit axe afin de faciliter la rotation dudit corps de bobine par l'usager.

5. Un appareil selon la revendication 1, dans lequel les moyens de coupe comprennent une bague équipée d'une encoche de coupe, ladite bague est adaptée pour assemblage à proximité de l'extrémité de débit/l'extrémité graphique dudit corps de crayon.
